# FASCICULE DE BREVET EUROPEEN

(11) **EP 1 649 699 B1**
(45) Date de publication et mention de la délivrance du brevet: **05.06.2013**
(21) Numéro de dépôt: 04767655.6
(22) Date de dépôt: 09.07.2004
(51) Int. Cl.: H04N 13/00, H04N 13/02

(54) **PROCEDE POUR CALIBRER AU MOINS DEUX CAMERAS VIDEO L’UNE PAR RAPPORT A L’AUTRE POUR PRISES DE VUES STEREOSCOPIQUES ET DISPOSITIF PERMETTANT DE METTRE EN OEUVRE LE PROCEDE**
VERFAHREN ZUM KALIBRIEREN MINDESTENS ZWEIER VIDEOKAMERAS RELATIV ZUEINANDER ZUM STEREOSKOPISCHEN FILMEN UND EINRICHTUNG DAFÜR
METHOD FOR CALIBRATING AT LEAST TWO VIDEO CAMERAS RELATIVELY TO EACH OTHER FOR STEREOSCOPIC FILMING AND DEVICE THEREFOR

(30) Priorité: 28.07.2003 FR 0309208
(43) Date de publication de la demande: 26.04.2006
(73) Titulaire: Citilog, 94110 Arcueil (FR)
(72) Inventeur: DOURET, Jérôme, F-75013 Paris (FR); BENOSMAN, Ryad, F-75005 Paris (FR); DEVARS, Jean, F-91140 Villebon-Sur-Yvette (FR); BOUZAR, Salah, F- 92330 Sceaux (FR)
(74) Mandataire: Nguyen Van Yen, Christian
(86) Numéro de dépôt international: PCT/FR2004/001824
(87) Numéro de publication internationale: WO 2005/022929

(56) Documents cités:
- EP-A- 1 089 054
- WO-A-02/50770

## Description

La présente invention concerne les procédés pour calibrer au moins deux caméras vidéographiques, plus communément dénommées "caméras vidéo", l'une par rapport à l'autre, quand ces deux caméras sont constitutives d'un système de prise de vues stéréoscopiques d'une portion de voie apte à être parcourue par des corps ou objets de tous types, notamment pour déterminer l'état d'occupation de cette portion de voie et détecter les éventuels incidents pouvant se produire sur cette portion de voie.

Cette technique par vision stéréoscopique permet de déterminer la troisième dimension des objets, leur relief, en levant les ambiguités dues aux ombres, reflets, etc. qui peuvent se trouver sur ces objets, ce qui est très intéressant dans le domaine d'application au contrôle du trafic automobile, mais pas exclusivement.

Ces procédés trouvent une application particulièrement avantageuse pour la détection des incidents de toute nature sur des portions de voie de circulation de véhicules automobiles, ou analogues, tout en précisant qu'ils peuvent aussi être utilisés pour surveiller des portions de voies de tout autre type aptes à être parcourues par tous corps, qu'ils soient vivants, comme des piétons ou analogues circulant sur des trottoirs ou analogues, ou des objets comme des produits manufacturés placés sur des chemins de transport comme des tapis roulants, des voies de chemin de fer, ou analogues.

La présente invention concerne aussi les dispositifs permettant de mettre en oeuvre les procédés pour calibrer au moins deux caméras vidéo l'une par rapport à l'autre, quand ces deux caméras entrent dans la constitution d'un système de prises de vues stéréoscopiques d'une portion de voie de toute nature.

Actuellement, pour surveiller une portion de voie, comme une voie de circulation automobile, on utilise une caméra vidéo qui filme, en continu ou non, cette portion de voie. Les images obtenues sont traitées par une technique qui est bien connue maintenant des hommes du métier et qui est dénommée "analyse d'images". Les premières techniques mises en oeuvre utilisaient essentiellement une seule caméra. De nombreux documents, notamment des brevets, ont été publiés les concernant, et cette technique est d'ailleurs encore largement utilisée.

Cependant, dans le but d'affiner la surveillance des portions de voies, il a été réalisé des dispositifs comportant au moins deux caméras vidéo pour réaliser des vues stéréoscopiques, technique qui est, elle aussi, bien connue en elle-même.

Il est rappelé que cette technique consiste à utiliser au moins deux caméras qui sont pointées vers un objet à filmer avec ou sans une légère angulation entre leurs axes optiques, exactement comme les deux yeux du système optique d'un être humain. Cette technique permet d'obtenir des vues "en relief" quand elles sont regardées ou analysées selon une technique adaptée qui, étant connue en elle-même, ne sera pas rappelée ici.

Pour obtenir un couple d'images stéréoscopiques correct il faut bien entendu que les deux caméras donnent des images qui soient dimensionnées de la même façon dans le même repère, c'est-à-dire qui doivent être très similaires en dimensions et pouvoir se recaler selon la technique de stéréovision afin de faciliter la mise en oeuvre de la technique de stéréovision.

Avec un appareil photographique, il a été possible de réaliser, sans trop de difficultés, des vues stéréoscopiques en utilisant par exemple le même objectif et le même plan focal de mise en mémoire des deux vues.

Cette technique n'est pas facilement adaptable à des caméras vidéo. Aussi faut-il faire appel à deux caméras vidéo qui sont réglées de façon particulière l'une par rapport à l'autre de façon qu'elles donnent en sortie des images très proches l'une de l'autre, pour donner l'effet stéréoscopique bien connu en lui-même. Quand un tel dispositif est prévu pour déterminer l'état d'occupation d'une voie de circulation automobile, les deux caméras sont calibrées en usine, avec par exemple des mires. Le calibrage permet de connaître la position relative des caméras ainsi que les paramètres intrinsèques de chacune. Ensuite, elles sont disposées dans un boîtier protecteur spécial qui a pour but de figer la position et l'orientation relative des caméras, qui comporte des moyens pour faire pivoter chaque caméra autour généralement de deux ou trois axes orthogonaux et éventuellement des moyens pour ajuster la distance focale de son objectif. Une fois ces réglages effectués, ils sont figés et le boîtier est transporté sur site pour y être disposé de la même façon que lors des réglages en usine.

Il faut alors espérer que tous les paramétrages ont été correctement effectués initialement car, s'il faut les retoucher lorsque le boîtier est sur site, ces retouches s'avèrent délicates, et même parfois impossibles du fait notamment de l'implantation et/ou de la situation du boîtier contenant les caméras par rapport à la portion de voie. Ni les dispositifs de test de la direction de pointage d'un appareil photographique embarqué sur un mobile, tels que ceux divulgués par la demande de brevet EP1089054, ni les dispositifs pour compenser le défaut d'alignement d'un dispositif de prise de vues également embarqué sur un véhicule, tels que ceux divulgués par la demande internationale WO02/50770 ne permettent de réaliser une calibration de deux caméras l'une par rapport à l'autre pour réaliser un effet stéréoscopique.

De toute façon, comme c'est le cas pour tout dispositif, il sera nécessaire de refaire périodiquement le calibrage des deux caméras l'une par rapport à l'autre, et la seule solution acceptable est le retour en usine pour effectuer ce nouveau réglage.

Aussi, la présente invention a-t-elle pour but de mettre en oeuvre un procédé pour calibrer au moins deux caméras vidéo l'une par rapport à l'autre, quand ces deux caméras sont constitutives d'un dispositif pour prise de vues stéréoscopiques d'une portion de voie apte à être parcourue par des corps de tous types, pour surveiller l'état d'occupation de cette portion de voie et, notamment, détecter les incidents survenus sur cette portion de vole, qui soit plus simple que les procédés de l'art antérieur dans le domaine et donc plus facilement automatisable et applicable en tout lieu en permettant d'effectuer in situ un calibrage des deux caméras vidéo, à tout instant si cela s'avère nécessaire, sans par exemple devoir déposer le boîtier contenant les caméras.

La présente invention a aussi pour but de réaliser un dispositif permettant de mettre en oeuvre ce dit procédé.

Plus précisément la présente invention a pour objet un procédé pour calibrer l'une par rapport à l'autre au moins deux caméras vidéo (1, 2) constitutives d'un dispositif pour prises de vues stéréoscopiques (3) d'une portion de voie (4), lesdites caméras ayant des axes optiques formant une direction oblique par rapport à la surface de ladite portion de voie, ledit procédé étant caractérisé en ce qu'il consiste:
- à disposer, en surface (5) de la portion de voie (4), une pluralité d'au moins quatre marques,aux intersections d' un premier groupe de droites virtuelles comprenant au moins une première et une deuxième droites virtuelles D₁, D₂ concourantes en un premier point P₁, et d'un second groupe de droites virtuelles comprenant au moins une quatrième et une cinquième droites virtuelles D₄, D₅ concourantes en un deuxième point P₂ non confondu avec le premier point P₁,
- à former, avec chacune des deux caméras vidéo, une image vidéo de cette portion de voie (4) comportant lesdites marques,
- à définir, dans chacune des deux images vidéo. un point caractéristique P_{c} de chaque image de marque,
- à déterminer, dans chaque image vidéo, au moyen des points caractéristiques P_{c}, une première et une deuxième droites images D₁ᵢ, D₂ᵢ et une quatrième et une cinquième droites images D₄ᵢ, D₅ᵢ,
- à déterminer, dans chaque image vidéo, un premier point image de concours P₁ᵢ₁, P₁ᵢ₂ des première et deuxième droites images D₁ᵢ, D₂ᵢ et un deuxième point image de concours P₂ᵢ₁, P₂ᵢ₂ des quatrième et cinquième droites images D₄ᵢ, D₅ᵢ, et
- à recaler les images vidéo délivrées par chaque caméra vidéo de façon que les points images P₁ᵢ₁, P₁ᵢ₂ soient à une distance déterminée des points images P₂ᵢ₁, P₂ᵢ₂ et que ces images vidéo soient aptes à former une image vidéo stéréoscopique.

Selon une autre caractéristique du procédé selon la présente invention, ladite pluralité de marques M₁₁, M₁₂, M₁₃ ; M₂₁, M₂₂, M₂₃ ; M₃₁, M₃₂, M₃₃ est au nombre d'au moins neuf, et il consiste en outre à former, dans le premier groupe de droites, une troisième droite virtuelle D₃ et, dans le second groupe de droites, une sixième droite virtuelle De, et à déterminer, par approximation, dans chaque image vidéo, un premier point image de concours P₁ᵢ₁, P₁ᵢ₂ considéré comme étant le point en lequel sont concourantes les trois première, deuxième et troisième droites images D₁ᵢ, D₂ᵢ, D₃ᵢ et un deuxième point image de concours P₂ᵢ₁, P₂ᵢ₂ considéré comme étant le point en lequel sont concourantes les trois quatrième, cinquième et sixième droites images D₄ᵢ, D₅ᵢ, D₆ᵢ.

La présente invention a aussi pour objet un dispositif permettant de mettre en oeuvrele procédé défini ci-dessus, caractérisé par le fait qu'il comporte :
- une pluralité de marques situées en surface de la portion de voie respectivement aux points d'intersection de deux groupes d'au moins deux droites virtuelles concourantes en un premier et un second points P₁, P₂.
- un support apte à être implanté en vue directe de ladite portion de voie,
- au moins deux caméras vidéo montées sur ledit support, chaque caméra comportant chacune une sortie de signaux vidéo représentatifs des images vidéo données par ladite caméra vidéo, et
- une unité d'analyse et de traitement de signaux vidéo programmable comportant des bornes d'entrée reliées aux sorties des deux caméras vidéo.

La présente invention a aussi pour objet un dispositif permettant de mettre en oeuvre le procédé défini ci-dessus, caractérisé par le fait qu'il comporte :
- une pluralité de marques situées en surface de la portion de voie respectivement aux points d'intersection de deux groupes d'au moins deux droites virtuelles concourantes en un premier et un second points P₁, P₂,
- un support apte à être implanté en vue directe de ladite portion de voie,
- au moins deux caméras vidéo comportant chacune une sortie de signaux vidéo représentatifs des images vidéo données par ladite caméra vidéo, chaque caméra comportant un objectif à focale variable, commandable à partir d'une entrée de commande,
- des moyens commandables pour monter chacune des deux caméras vidéo en rotation par rapport audit support autour d'au moins deux axes non confondus, ces moyens étant aptes à être commandés à partir d'entrées de commande, et
- une unité d'analyse et de traitement de signaux vidéo programmable comportant des bornes d'entrée reliées aux sorties des deux caméras vidéo et des bornes de sortie reliées aux entrées de commande des moyens commandables pour monter chacune des deux caméras vidéo en rotation par rapport audit support autour d'au moins deux axes non confondus et à l'entrée de commande de l'objectif à focale variable de chaque caméra vidéo.

D'autres caractéristiques et avantages de invention apparaîtront au cours de la description suivante donnée en regard des dessins annexés à titre illustratif mais nullement limitatif, dans lesquels :
La figure 1 illustre la première phase de mise en oeuvre du procédé selon l'invention pour calibrer au moins deux caméras vidéo l'une par rapport à l'autre, consistant à apposer un nombre minimum de marques sur la portion de voie à surveiller, cette figure 1 représentant ces marques après qu'elles aient été apposées sur la portion de voie,
La figure 2 illustre la vue qui devrait être obtenue avec un appareil optique de prise de vues, comme une caméra vidéo, si cette dernière était d'une structure et d'un fonctionnement parfait et si les marques étaient rigoureusement alignées sur la portion de voie, comme il est explicité ci-après dans la description,
La figure 3 illustre une autre phase du procédé, en l'occurrence celle qui consiste à obtenir une "image traitée" à partir d'une image vidéo obtenue par une des deux caméras.
La figure 4 représente une forme d'une des marques sur la portion de voie, illustrant un état possible de la marque ayant subi une certaine détérioration dans le temps après qu'elle ait été apposée dans un état correct sur cette surface de la portion de voie,
La figure 5 représente, à titre d'exemple et de façon schématique, dans une même vue, trois phases du procédé selon l'invention, parmi les dernières, pour calibrer au moins deux caméras vidéo l'une par rapport, et
La figure 6 représente le schéma de principe d'un mode de réalisation d'un dispositif selon l'invention permettant de mettre en oeuvre le procédé selon l'invention.

Il est bien précisé que, sur les figures, les mêmes références désignent les mêmes éléments, quelle que soit la figure sur laquelle elles apparaissent et quelle que soit la forme de représentation de ces éléments. De même, si des éléments ne sont pas spécifiquement référencés sur l'une des figures, leurs références peuvent être aisément retrouvées en se reportant à une autre figure.

Il est en outre précisé que, lorsque, selon la définition de l'invention, l'objet de l'invention comporte "au moins un" élément ayant une fonction donnée, le mode de réalisation décrit peut comporter plusieurs de ces éléments.

Réciproquement, si le mode de réalisation de l'objet selon invention tel qu'illustré comporte plusieurs éléments de fonction identique et si, dans la description, il n'est pas spécifié que l'objet selon cette invention doit obligatoirement comporter un nombre particulier de ces éléments, l'objet de l'invention pourra être défini comme comportant "au moins un" de ces éléments.

Il est enfin précisé que lorsque, dans la présente description, une expression définit à elle seule, sans mention particulière spécifique la concernant, un ensemble de caractéristiques structurelles, [par exemple ∑ = ∑(α, β, γ, ...)], ces caractéristiques peuvent être prises, pour la définition de l'objet de la protection demandée, quand cela est techniquement possible, soit séparément, [par exemple α, et/ou β, et/ou y, ...], soit en combinaison totale et/ou partielle, [par exemple ∑(α,β,γ), et/ou ∑(α,β), et/ou ∑(α,γ), et/ou ∑(α,γ)].

D'une façon générale, le procédé selon l'invention pour calibrer au moins deux caméras vidéo 1, 2 l'une par rapport à l'autre, quand ces deux caméras sont constitutives d'un dispositif pour prises de vues stéréoscopiques 3 d'une portion de voie 4 apte à être parcourue par des corps de tous types, pour la détection de l'état d'occupation de cette portion de voie et notamment pour la détection des incidents pouvant se produire sur cette portion de voie, consiste tout d'abord à disposer, en surface 5 de la portion de voie 4, une pluralité de marques, au moins au nombre de quatre, ces marques ayant une teinte différente de celle de la surface de la portion de voie 4 et étant sensiblement réparties de façon ordonnée sur une premier groupe de première et deuxième droites virtuelles D₁, D₂ concourantes en un premier point P₁, et de façon que des points donnés appartenant respectivement aux marques de même ordonnée par rapport au premier point P₁ sur ces première et deuxième droites virtuelles D₁, D₂, soient situés sur un second groupe de quatrième et cinquième droites virtuelles D₄, D₅ concourantes en un deuxième point P₂ non confondu avec le premier point P₁.

Il consiste ensuite à former, avec chacune des deux caméras vidéo, une image vidéo de cette portion de voie comportant les marques, à définir, dans chacune des deux images vidéo, un point caractéristique P_{c} de chaque image de marque, à déterminer, au moyen des points caractéristiques P_{c}, deux première et deuxième droites images D₁ᵢ, D₂ᵢ, et deux quatrième et cinquième droites images D₄ᵢ, D₅ᵢ, à déterminer, dans chaque image vidéo, un premier point image de concours P₁ᵢ₁, P₁ᵢ₂ des deux première et deuxième droites images D₁ᵢ, D₂ᵢ, et un deuxième point image de concours P₂ᵢ₁, P₂ᵢ₂ des deux quatrième et cinquième droites images D₄ᵢ, D₅ᵢ, et à traiter les signaux vidéo délivrés par chaque caméra vidéo de façon que ces signaux soient représentatifs de deux images aptes à former une image vidéo stéréoscopique.

Il est cependant bien précisé que ce procédé peut aussi s'appliquer à un dispositif comportant plus de deux caméras si cela est nécessaire. L'homme du métier saura, sans difficulté, adapter le procédé décrit ci-après à un nombre de caméras supérieur à deux.

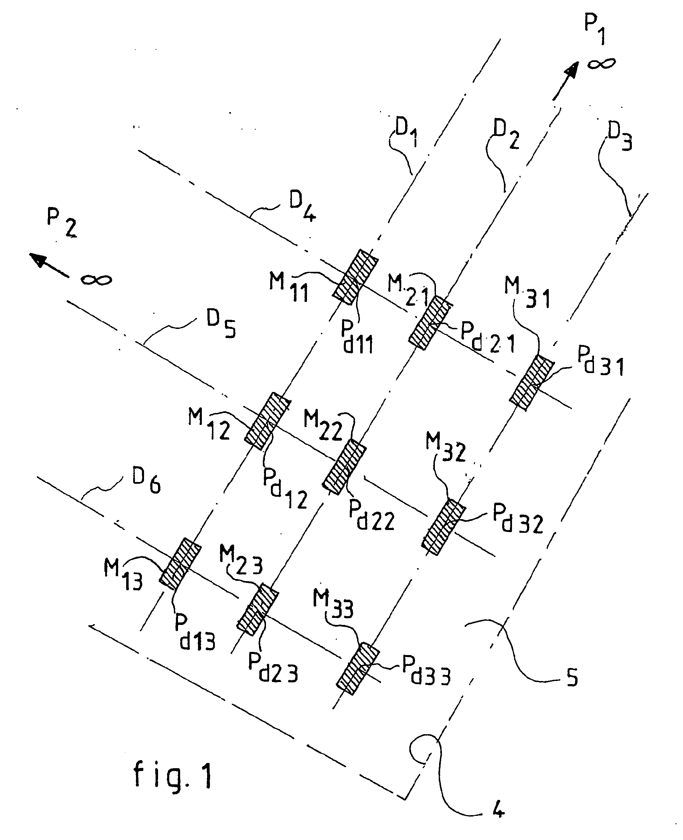

Le procédé décrit ci-dessus donne déjà de bons résultats mais, pour obtenir des résultats encore plus précis, il consiste tout d'abord, par référence à la figure 1, à disposer, en surface 5 de la portion de voie 4, qui est choisie avantageusement plane ou relativement plane, une pluralité de marques M₁₁, M₁₂, M₁₃ ; M₂₁, M₂₂, M₂₃ ; M₃₁, M₃₂, M₃₃ au nombre d'au moins neuf. D'une façon générale, il est plus avantageux que le nombre de marques soit un multiple de trois et au moins égal à neuf, tel que l'on puisse déterminer au moins trois droites dans au moins deux groupes de directions différentes.

Par exemple, dans le cas d'une voie de circulation automobile ou analogue, sachant que le sol est gris ou même noir, ces marques sont par exemple des bandes blanches ou analogues, qui sont par exemple collées sur le sol, exactement comme les bandes dites "blanches" qui se trouvent sur les routes et/ou autoroutes pour matérialiser les voies de circulation ou les bandes de roulement protégées ou analogues.

Selon une caractéristique importante de l'invention, ces marques sont cependant disposées sur la portion de voie 4 en étant sensiblement réparties de façon ordonnée sur une premier groupe de première, deuxième et troisième droites virtuelles D₁, D₂, D₃ concourantes en un premier point P₁, et de façon que des points donnés P_{d11}, P_{d21}, P_{d31}, ; P_{d12}, P_{d22}, P_{d32} ; P_{d13}, P_{d23}, P_{d33} appartenant respectivement aux marques de même ordonnée par rapport au premier point P₁ sur ces trois première, deuxième et troisième droites virtuelles D₁, D₂, D₃, soient situés sur un second groupe de quatrième, cinquième et sixième droites virtuelles D₄, D₅, D₆ concourantes en un deuxième point P₂ non confondu avec le premier point P₁.

Il est précisé que, par marques, on entend tous signes, dessins, etc. de toute nature qui, associés au moins par deux, permettent de définir des droites.

Les deux points P₁ et P₂ peuvent être situés à distance finie, ou à l'infini. Cette dernière possibilité est intéressante car elle permet d'utiliser, par exemple dans le cas de la surveillance des voies de circulation automobile, les marques au sol ou lignes blanches ou jaunes qui sont normalisées rectangulaires et qui sont déjà apposées sur le sol de la voie, puisqu'elles ont, presque en tout lieu, la même longueur, la même largeur et le même espacement. Elles peuvent en plus être choisies sur des portions de voies rectilignes. La figure 1, représente, à titre d'exemple, sous forme schématique, une portion de voie 4, en surface 5 de laquelle sont placées neuf marques à l'intersection de deux groupes de trois droites virtuelles.

Mais il est bien évident que des marques pourraient être spécialement placées sur une voie de quelque nature que ce soit, de façon que les deux points P₁ et P₂ soient à des distances finies.

Pour la compréhension de la présente description, chaque marque est ordonnée sur les droites D₁, D₂, D₃, c'est-à-dire affectée d'un numéro d'ordre à partir du premier point P₁. Par exemple, la première marque M₁₁ est affectée du numéro "1" sur la première droite D₁, la deuxième M₁₂ est affectée du numéro "2" sur cette même droite D₁, et ainsi de suite, en précisant qu'il en est de même pour les marques sur les deux autres droites D₂ et D₃.

De ce fait, selon la caractéristique de invention énoncée ci-dessus, toutes les marques ayant le même numéro d'ordre sur les droites D₁, D₂, D₃ sont respectivement situées sur les droites D₄, D₅, D₆ qui se coupent sur le second point P₂.

Quant aux points donnés P_{d11}, P_{d12}, P_{d13} ; P_{d21}, P_{d22}, P_{d23} ; P_{d31}, P_{d32}, P_{d33} des marques tels que définis ci-dessus, ils peuvent être choisis de différentes façons. Par exemple, lorsque les marques sont de forme sensiblement rectangulaire, ce qui est le cas le plus général dans le cas des voies de circulation automobile, ces points donnés peuvent être, soit les points d'intersection des diagonales des marques, soit l'un des sommets des rectangles, etc..

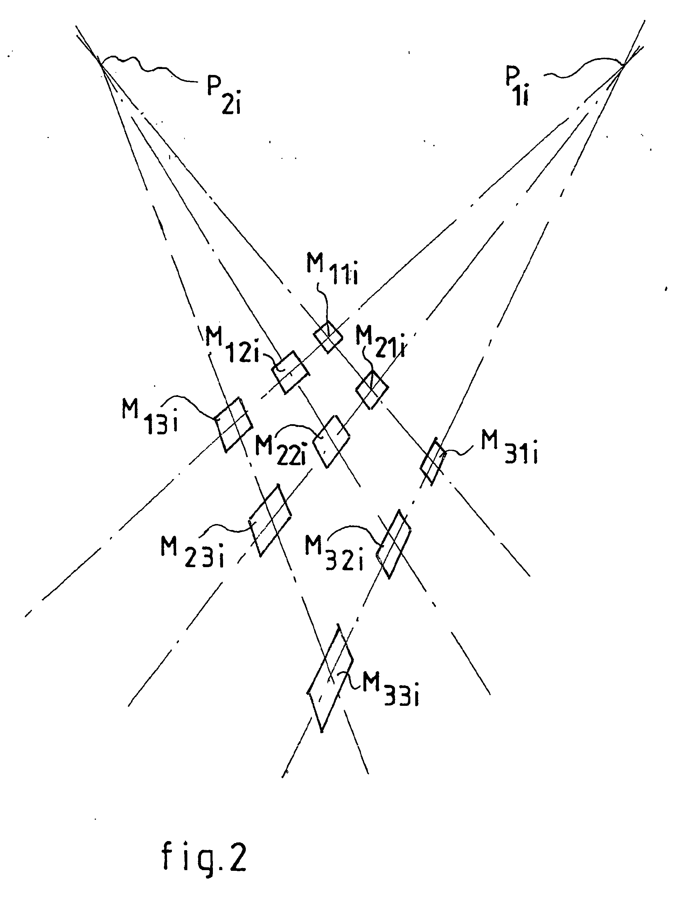

Le procédé consiste ensuite, à quelque instant que ce soit après que la première phase ci-dessus ait été accomplie, à former, avec chacune des deux caméras vidéo, une image vidéo, fixe ou filmée, de la portion de voie 4 comportant les marques M₁₁, M₁₂, M₁₃ ; M₂₁, M₂₂, M₂₃ ; M₃₁, M₃₂, M₃₃. Une telle image de cette voie est, à titre d'exemple, illustrée sur la figure 2.

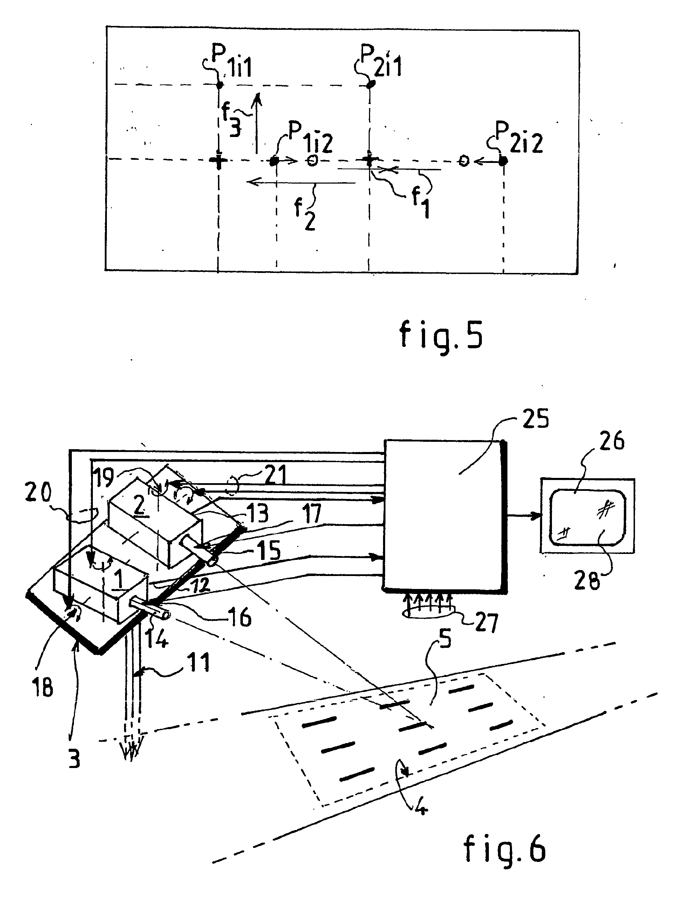

Sur cette vue, les images des droites virtuelles D₁, D₂, D₃, et D₄, D₅, D₆, sont représentées se coupant en des points situés à distances finies car il est bien évident que les caméras sont disposées comme illustré sur la figure 6 en vue directe de la portion de voie 4 de façon que leurs axes optiques forment une direction oblique par rapport à la surface 5 de la portion de voie 4. Par un effet de perspective, aux points objets P₁ et P₂ situés à l'infini comme représenté sur la figure 1, correspondent les points images P₁ᵢ et P₂ᵢ à distances finies. Quant aux marques objets rectangulaires M₁₁, M₁₂, M₁₃ ; M₂₁, M₂₂, M₂₃ ; M₃₁, M₃₂, M₃₃ selon la figure 1, correspondent les marques images en forme de quadrilatères quelconques, M₁₁ᵢ, M₁₂ᵢ, M₁₃ᵢ ; M₂₁ᵢ, M₂₂ᵢ, M₂₃ᵢ ; M₃₁ᵢ, M₃₂ᵢ, M₃₃ᵢ.

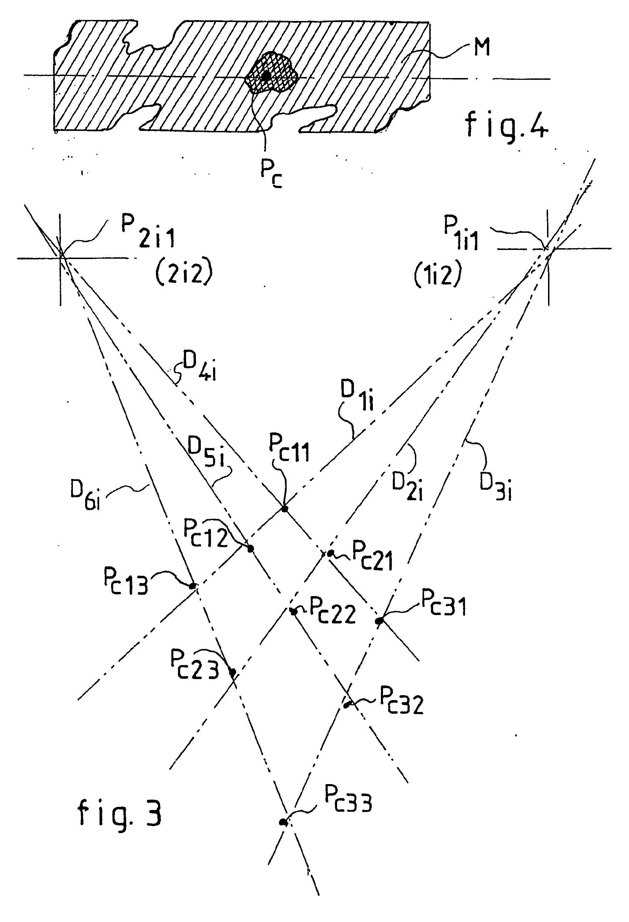

Le procédé consiste ensuite à définir, dans l'image vidéo donnée par chaque caméra, un point caractéristique P_{c} (figure 4), soit, pour l'ensemble des images de marques, les points caractéristiques P_{c11}, P_{c12}, P_{c13} ; P_{c21}, P_{c22}, P_{c23} ; P_{c31}, P_{c32}, P_{c33}.

Il est possible de déterminer le point caractéristique P_{c} de chaque image de marque de différentes façons. Par exemple, il est possible d'utiliser l'intersection d'au moins deux droites reliant respectivement deux par deux quatre points non confondus de l'image de marque, par exemple les diagonales du quadrilatère qui est l'image de la marque rectangulaire.

Cependant, dans une mise en oeuvre avantageuse du procédé dans le cas de la surveillance d'une voie de circulation automobile, comme les marques au sol M peuvent subir dans le temps des dégradations comme celles données à titre d'exemple sur la figure 4, et ne plus représenter une forme rectangulaire parfaite, le point caractéristique P_{c} sera alors défini, par exemple, par le barycentre de la teinte de l'image des marques, ou par le centre de gravité de la surface totale de l'image de marque, etc..

Ces points caractéristiques P_{c11}, P_{c12}, P_{c13} ; P_{c21}, P_{c22}, P_{c23} ; P_{c31}, P_{c32}, P_{c33} étant définis, le procédé consiste alors à déterminer, au moyen de ces points caractéristiques P_{c}, trois première, deuxième et troisième droites images D₁ᵢ, D₂ᵢ, D₃ᵢ et trois quatrième, cinquième et sixième droites images D₄ᵢ, D₅ᵢ, D₆ᵢ, qui correspondent en quelque sorte aux images des droites virtuelles respectivement D₁, D₂, D₃, et D₄, D₅, D₆.

Cependant, comme illustré sur la figure 3, ces droites D₁ᵢ, D₂ᵢ, D₃ᵢ d'une part et D₄ᵢ, D₅ᵢ, D₆ᵢ d'autre part ne sont pas en général concourantes en un même point car les points caractéristiques P_{c11}, P_{c12}, P_{c13} ; P_{c21}, P_{c22}, P_{c23} ; P_{c31}, P_{c32}, P_{c33} peuvent ne pas être parfaitement alignés trois à trois, par exemple à cause d'incertitudes dans l'analyse des images, de la mauvaise qualité des images de marques due à une trop grande détérioration de ces marques, des conditions atmosphériques, etc..

Aussi, le procédé consiste-t-il, à partir de ces deux groupes de droites images virtuelles, respectivement D₁ᵢ, D₂ᵢ, D₃ᵢ et D₄ᵢ, D₅ᵢ, D₆ᵢ, à déterminer, par approximation, dans chaque image vidéo, un premier point image de concours P₁ᵢ₁, P₁ᵢ₂ considéré comme étant le point en lequel sont présumées concourantes les trois première, deuxième et troisième droites images D₁ᵢ, D₂ᵢ, D₃ᵢ et un deuxième point image de concours P₂ᵢ₁, P₂ᵢ₂ considéré comme étant le point en lequel sont concourantes les trois quatrième, cinquième et sixième droites images D₄ᵢ, D₅ᵢ, D₆ᵢ.

Cependant, dans un mode de mise en oeuvre possible du procédé selon l'invention, l'étape ci-dessus consiste à repositionner, dans les images vidéo, les deux groupes de trois droites, d'une part D₁ᵢ, D₂ᵢ, D₃ᵢ et d'autre part D₄ᵢ, D₅ᵢ, D₆ᵢ, de telle sorte qu'elles se coupent en un point unique, ces points de concours déterminant les points images de concours P₁ᵢ₁, P₁ᵢ₂ et P₂ᵢ₁, P_{2i2.}

Ainsi, les deux caméras délivrent respectivement des signaux vidéo représentatifs de ces images vidéo avec les premiers points images de concours P₁ᵢ₁, P₁ᵢ₂ et les deuxièmes points images de concours P₂ᵢ₁. P₂ᵢ₂. Ces signaux vidéo sont en fait représentatifs de la mire constituée par les marques M₁₁, M₁₂, M₁₃ ; M₂₁, M₂₂, M₂₃ ; M₃₁, M₃₂, M₃₃.

Ces signaux vidéo délivrés par chaque caméra peuvent être traités pour que, combinés entre eux, ils forment, par exemple par recalage, deux images aptes à former une image vidéo stéréoscopique selon la technique connue dans ce domaine, comme rappelé auparavant.

D'une façon préférentielle, dans une première mise en oeuvre de cette dernière étape du procédé, les signaux vidéo sont traités de façon informatique, ce qui est en fait une mise en oeuvre peu onéreuse. Une telle opération ce fait avec une unité de traitement de signaux vidéo programmable. par exemple du type à microprocesseur, comportant des bornes d'entrée reliées aux sorties 12, 13 des deux caméras vidéo 1, 2, par exemple comme illustré sur la figure 5.

L'élaboration d'un tel programme pour cette unité de traitement est du domaine de l'homme du métier et, comme elle n'entre pas dans le cadre de l'invention, elle ne sera pas décrite ici.

Cependant, il est aussi possible de mettre en oeuvre cette dernière étape du procédé, non pas de façon informatique, mais d'une façon électro-mécanique.

Cette seconde mise en oeuvre de la dernière étape du procédé est décrite ci-après car, même si elle n'est pas celle qui est préférée car relativement onéreuse puisque demandant de nombreux moyens spécifiques, elle permet néanmoins d'expliciter de façon encore plus compréhensible cette dernière étape du procédé et notamment sa première mise en oeuvre définie ci-dessus.

Dans cette seconde mise en oeuvre de la dernière étape, le procédé consiste à régler les deux caméras vidéo l'une par rapport à l'autre jusqu'à ce que, en recalant les deux images vidéo données par ces deux caméras vidéo, les deux premier et deuxième points images de concours P₁ᵢ₁, P₂ᵢ₁ d'une image vidéo soient à une distance donnée respectivement des deux premier et deuxième points images de concours P₁ᵢ₂, P₂ᵢ₂ de l'autre image vidéo, cette distance étant facilement déterminable par un homme du métier pour donner un effet stéréoscopique.

Cette distance peut même, dans certains cas, avoir une valeur nulle. Par exemple, dans le cas de l'application à la surveillance d'une portion de voie de circulation automobile, les objets à filmer en stéréoscopie se trouvent situés entre la surface 5 de cette portion de voie 4 et les objectifs des caméras et, de ce fait, le décalage entre les images prises par les deux caméras vidéo permet à lui seul d'obtenir l'effet stéréoscopique.

Le réglage des caméras l'une par rapport à l'autre peut être obtenu en modifiant par exemple l'un des paramètres suivants de chaque caméra vidéo : son site, son azimut, et/ou son tangage, son champ optique de vision par exemple avantageusement en réglant la distance focale de l'objectif de la caméra, sa résolution.

La figure 5 illustre de façon schématique un exemple de réglage des deux caméras comme mentionné ci-dessus. Le cadre sur cette figure 5 peut représenter l'écran 28 d'un moniteur vidéo 26, comme schématiquement illustré sur la figure 6, sur lequel sont superposées les deux images délivrées par les deux caméras après leur traitement comme mentionné ci-dessus. Dans ce cadre, il apparaît le premier couple de points P₁ᵢ₁ et P₂ᵢ₁ définis par l'image donnée par la première caméra 1, et le second couple de points P₁ᵢ₂ et P₂ᵢ₂ définis par l'image donnée par la seconde caméra 2. Dans cet exemple, les points P₁ᵢ₂ et P₂ᵢ₂ du second couple (représentés en gros points noirs) sont, d'une part non confondus avec les points P₁ᵢ₁ et P₂ᵢ₁ du premier couple, et d'autre part à une distance l'un de l'autre supérieure à la distance séparant les points de ce premier couple.

Dans ce cas, le réglage des deux caméras vidéo s'effectuera par exemple de la façon suivante : tout d'abord, diminution du champ optique de la seconde caméra 2 de façon à rapprocher les points P₁ᵢ₂ et P₂ᵢ₂ l'un de l'autre selon les flèches f₁ jusqu'à ce que la distance les séparant soit sensiblement égale à celle séparant les points P₁ᵢ₁ et P₂ᵢ₁ (les points P₁ᵢ₂ et P₂ᵢ₂ dans cette position sont représentés par des petits cercles), puis cette seconde caméra est pivotée autour d'un axe vertical de façon que ces mêmes points P₁ᵢ₂ et P₂ᵢ₂ soient déplacés suivant la flèche f₂ jusqu'à ce qu'ils viennent en regard des points P₁ᵢ₁ et P₂ᵢ₁ (les points P₁ᵢ₂ et P₂ᵢ₂ dans cette position sont représentés par des signes "+"), et enfin cette même seconde caméra sera pivotée autour d'un axe horizontal de façon que les points P₁ᵢ₂ et P₂ᵢ₂ soient déplacés suivant la flèche f₃ jusqu'à ce qu'ils viennent se superposer, ou sensiblement se superposer, aux deux points P₁ᵢ₁ et P₂ᵢ₁.

Il est alors certain que les deux images données par les deux caméras peuvent être utilisées pour surveiller l'état d'occupation d'une voie de circulation, par exemple automobile, selon des techniques de stéréovision connues de l'art antérieur.

Le réglage, ou calibrage, des caméras est alors terminé. Dans l'exemple donné ci-dessus, seuls les paramètres de la caméra 2 ont été modifiés. Mais le même résultat aurait pu être obtenu en modifiant uniquement les paramètres de la caméra 1, ou en modifiant simultanément les paramètres des deux caméras 1 et 2.

Le procédé décrit ci-dessus est facilement mis en oeuvre avec un dispositif dont un mode de réalisation est schématiquement illustré sur la figure 6, piloté au moyen d'un logiciel dont l'élaboration est du domaine de l'homme du métier connaissant la description des différentes étapes du procédé donnée ci-dessus.

Ce dispositif comporte, d'une façon générale, une pluralité de marques situées en surface 5 de la portion de voie 4 à surveiller, correspondant respectivement aux intersections de deux groupes d'au moins deux droites virtuelles concourantes en un premier et un second points P₁, P₂, un support 11 apte à être implanté en vue directe de la portion de voie 4, au moins deux caméras vidéo 1, 2 montées sur le support comportant chacune une sortie 12, 13 de signaux vidéo représentatifs des images vidéo données par cette caméra vidéo, et une unité d'analyse et de traitement de signaux vidéo programmable 25 comportant des bornes d'entrée reliées aux sorties 12, 13 des deux caméras vidéo.

Dans le mode de réalisation tel qu'illustré sur le figure 6, le dispositif comporte neuf marques M₁₁, M₁₂, M₁₃ ; M₂₁, M₂₂, M₂₃ ; M₃₁, M₃₂, M₃₃ situées sur trois droites virtuelles concourantes en un premier et un second points P₁, P₂, un support 11 apte à être implanté en vue directe de la portion de voie 4, au moins deux caméras vidéo 1, 2 comportant chacune une sortie 12, 13 de signaux vidéo représentatifs des images vidéo données par cette caméra vidéo, chaque caméra comportant un objectif à focale variable 14, 15 commandable à partir d'une entrée de commande 16, 17, des moyens commandables 18, 19, par exemple du type "montage à la cardan", pour monter chacune des deux caméras vidéo en rotation par rapport au support 11 autour d'au moins deux axes non confondus chacun couplé par exemple à un moteur d'entraînement, ces moyens 18, 19 étant aptes à être commandés à partir d'entrées de commande 20, 21, et une unité d'analyse et de traitement de signaux vidéo programmable 25, par exemple du type à microprocesseur ou analogue, comportant des bornes d'entrée reliées aux sorties 12, 13 des deux caméras vidéo 1, 2 et des bornes de sortie reliées aux entrées de commande 20, 21 des moyens commandables 18, 19 pour monter chacune des deux caméras vidéo en rotation par rapport au support 11 autour d'au moins deux axes non confondus, et aux entrées de commande 16, 17 de l'objectif à focale variable 14, 15 de chaque caméra vidéo, cette unité d'analyse et de traitement de signaux vidéo programmable 25 comportant une entrée de programmation 27 de façon à pouvoir charger le logiciel d'analyse et de traitement mentionné ci-dessus.

## Revendications

1. Procédé pour calibrer l'une par rapport à l'autre au moins deux caméras vidéo (1, 2) constitutives d'un dispositif pour prises de vues stéréoscopiques (3) d'une portion de voie (4), lesdites caméras ayant des axes optiques formant une direction oblique par rapport à la surface de ladite portion de voie, ledit procédé étant **caractérisé en ce qu'**il consiste:
- à disposer, en surface (5) de la portion de voie (4), une pluralité d'au moins quatre marques,aux intersections d'un premier groupe de droites virtuelles comprenant au moins une première et une deuxième droites virtuelles D₁, D₂ concourantes en un premier point P₁, et d'un second groupe de droites virtuelles comprenant au moins une quatrième et une cinquième droites virtuelles D₄, D₅ concourantes en un deuxième point P₂ non confondu avec le premier point P₁,
- à former, avec chacune des deux caméras vidéo, une image vidéo de cette portion de voie (4) comportant lesdites marques,
- à définir, dans chacune des deux images vidéo. un point caractéristique P_{c} de chaque image de marque,
- à déterminer, dans chaque image vidéo, au moyen des points caractéristiques P_{c}, une première et une deuxième droites images D₁ᵢ, D₂ᵢ et une quatrième et une cinquième droites images D₄ᵢ, D₅ᵢ,
- à déterminer, dans chaque image vidéo, un premier point image de concours P₁ᵢ₁, P₁ᵢ₂ des première et deuxième droites images D₁ᵢ, D₂ᵢ et un deuxième point image de concours P₂ᵢ₁, P₂ᵢ₂ des quatrième et cinquième droites images D₄ᵢ, D₅ᵢ, et
- à recaler les images vidéo délivrées par chaque caméra vidéo de façon que les points images P_{1i1,} P₁ᵢ₂ soient à une distance déterminée des points images P₂ᵢ₁, P₂ᵢ₂ et que ces images vidéo soient aptes à former une image vidéo stéréoscopique.

2. Procédé selon la revendication 1, **caractérisé en ce que** ladite pluralité de marques M₁₁, M₁₂, M₁₃ ; M₂₁. M₂₂, M₂₃; M₃₁, M₃₂, M₃₃ est au nombre d'au moins neuf, et **en ce que** l'on forme en outre, dans le premier groupe de droites, une troisième droite virtuelle D3 et, dans le second groupe de droites, une sixième droite virtuelle D6, et à déterminer par approximation, dans chaque image vidéo, un premier point image de concours P₁ᵢ₁, P₁ᵢ₂ considéré comme étant le point en lequel sont concourantes les trois première, deuxième et troisième droites images D₁ᵢ, D₂ᵢ, D₃ᵢ et un deuxième point image de concours P₂ᵢ₁, P₂ᵢ₂ considéré comme étant le point en lequel sont concourantes les trois quatrième, cinquième et sixième droites images D₄ᵢ, D₅ᵢ, D₆ᵢ.

3. Procédé selon l'une des revendications 1 et 2, **caractérisé en ce que** le traitement des signaux vidéo délivrés par chaque caméra vidéo de façon que ces signaux soient représentatifs de deux images aptes à former une image vidéo stéréoscopique est effectué de façon informatique.

4. Procédé selon l'une des revendications 1 et 2, **caractérisé en ce que** le traitement des signaux vidéo délivrés par chaque caméra vidéo de façon que ces signaux soient représentatifs de deux images aptes à former une image vidéo stéréoscopique consiste à régler les positions relatives des deux caméras vidéo l'une par rapport à l'autre.

5. Procédé selon l'une des revendications 2 à 4, **caractérisé en ce que** les trois première, deuxième et troisième droites virtuelles D₁, D₂, D₃ sont définies telles que le premier point P₁ soit situé à l'infini.

6. Procédé selon l'une des revendications 2 à 5, **caractérisé en ce que** les trois quatrième, cinquième et sixième droites virtuelles D₄, D₅, D₆ sont définies telles que le second point P₂ soit situé à l'infini.

7. Procédé selon l'une des revendications 2 à 6, **caractérisé en ce qu'**il comprend une étape de repositionnement dans les images vidéo des deux groupes de trois droites d'une part D₁ᵢ, D₂ᵢ, D₃ᵢ et d'autre part D₄ᵢ, D₅ᵢ, D₆ᵢ de telle sorte qu'elles se coupent en un point unique, ces points de concours déterminant lesdits points images de concours P₁ᵢ₁, P₁ᵢ₂ et P₂ᵢ₁, P₂ᵢ₂

8. Procédé selon l'une des revendications 2 à 7, **caractérisé en ce que** lesdites marques sont sensiblement identiques les unes aux autres.

9. Procédé selon la revendication 7, **caractérisé en ce que** lesdites marques M₁₁, M₁₂, M₁₃, M₂₁, M₂₂, M₂₃, M₃₁, M₃₂, M33 sont situées sur au moins l'un des premier et second groupe de droites virtuelles D₁, D₂, D₃ et D₄, D₅, D₆, à égale distance les unes des autres.

10. Procédé selon l'une des revendications 4 et 5 à 9, lorsqu'elle dépend de la revendication 4, **caractérisé en ce qu'**il comprend une étape de réglage de chaque caméra vidéo (1, 2) en modifiant au moins l'un de ses paramètres suivants: son site, son azimut, son champ optique de vision, sa résolution.

11. Procédé selon l'une des revendications 1 à 10, **caractérisé en ce que** le point caractéristique P_{c} de chaque image de marque est déterminé en utilisant au moins l'un des paramètres suivants : intersection d'au moins deux droites reliant respectivement deux par deux quatre points non confondus de l'image de marque, barycentre de la teinte de l'image de marque, centre de gravité de la surface totale de l'image de marque.

12. Procédé selon l'une des revendications 1 à 11, **caractérisé en ce que**, lorsque lesdites marques sont de forme sensiblement rectangulaire, le point donné P_{d11}, P_{d12}, P_{d13}; P_{d21}, P_{d22}, P_{d23} ; P_{d31}, P_{d32}, P_{d33} est déterminé par au moins l'un des points suivants: le point d'intersection des deux diagonales du rectangle de chaque marque, un des sommets du rectangle.

13. Dispositif comprenant des moyens permettant de mettre en oeuvre le procédé selon la revendication 3, **caractérisé en ce qu'**il comprend:
- une pluralité de marques M₁₁, M₁₂, M₁₃ ; M₂₁. M₂₂, M₂₃; M₃₁, M₃₂, M₃₃ situées en surface (5) de la portion de voie (4) respectivement aux points d'intersection de deux groupes d'au moins deux droites virtuelles concourantes en un premier et un second points P₁, P₂,
- un support (11) apte à être implanté en vue directe de ladite portion de voie,
- au moins deux caméras vidéo (1, 2) montées sur ledit support, chaque caméra comportant chacune une sortie (12, 13) de signaux vidéo représentatifs des images vidéo données par ladite caméra vidéo, et
- une unité d'analyse et de traitement de signaux vidéo programmable (25) comportant des bornes d'entrée reliées aux sorties (12, 13) des deux caméras vidéo.

14. Dispositif comprenant des moyens permettant de mettre en oeuvre le procédé selon la revendication 4, **caractérisé en ce qu'**il comprend:
- une pluralité de marques M₁₁, M₁₂, M₁₃ ; M₂₁. M₂₂, M₂₃; M₃₁, M₃₂, M33 situées en surface (5) de la portion de voie (4) respectivement aux points d'intersection de deux groupes d'au moins deux droites virtuelles concourantes en un premier et un second points P₁, P₂,
- un support (11) apte à être implanté en vue directe de ladite portion de voie (4),
- au moins deux caméras vidéo (1, 2) comportant chacune une sortie (12,13) de signaux vidéo représentatifs des images vidéo données par ladite caméra vidéo,
chaque caméra comportant un objectif à focale variable (14, 15) commandable à partir d'une entrée de commande (16, 17)
- des moyens commandables (18, 19) pour monter chacune des deux caméras vidéo en rotation par rapport audit support (11) autour d'au moins deux axes non confondus, ces moyens étant aptes à être commandés à partir d'entrées de commande (20,21), et
- une unité d'analyse et de traitement de signaux vidéo programmable (25) comportant des bornes d'entrée reliées aux sorties (12, 13) des deux caméras vidéo (1, 2) et des bornes de sortie reliées aux entrées de commande (20, 21) des moyens 25 commandables (18, 19) pour monter chacune des deux caméras vidéo en rotation par rapport audit support (11) autour d'au moins deux axes non confondus et aux entrées de commande (16, 17) de l'objectif à focale variable (14, 15) de chaque caméra vidéo.

## Patentansprüche

1. Verfahren zum Kalibrieren von wenigstens zwei Videokameras (1, 2) relativ zueinander, wobei die Kameras eine Vorrichtung bilden zum Aufnehmen stereoskopischer Ansichten (3) eines Wegabschnitts (4), wobei die Kameras optische Achsen in einer Richtung haben, die in Bezug auf die Oberfläche des Wegabschnitts schräg ist, wobei das Verfahren **dadurch gekennzeichnet ist, dass** es Folgendes beinhaltet:
- Anordnen, auf der Oberfläche (5) des Wegabschnitts (4), einer Mehrzahl von wenigstens vier Markierungen an den Schnittpunkten einer ersten Gruppe von virtuellen Geraden, die wenigstens eine erste und eine zweite virtuelle Gerade D₁, D₂ umfassen, die in einem Punkt P₁ zusammenlaufen, und einer zweiten Gruppe von virtuellen Geraden, die wenigstens eine vierte und eine fünfte virtuelle Gerade D₄, D₅ umfassen, die in einem zweiten Punkt P₂ zusammenlaufen, der nicht mit dem ersten Punkt P₁ zusammenfällt,
- Erzeugen, mit jeder der beiden Videokameras, eines Videobildes dieses die Markierungen umfassenden Wegabschnitts (4),
- Definieren, in jedem der beiden Videobilder, eines charakteristischen Punktes P_{c} von jedem Bild der Markierungen,
- Ermitteln, in jedem Videobild anhand der charakteristischen Punkte P_{c}, einer ersten und einer zweiten Bildgeraden D₁ᵢ, D₂ᵢ sowie einer vierten und einer fünften Bildgeraden D₄ᵢ, D₅ᵢ,
- Ermitteln, in jedem Videobild, eines ersten Zusammenlaufbildpunktes P₁ᵢ₁, P₁ᵢ₂ der ersten und der zweiten Bildgeraden D₁ᵢ, D₂ᵢ und eines zweiten Zusammenlaufbildpunkts P₂ᵢ₁, P₂ᵢ₂ der vierten und fünften Bildgeraden D₄ᵢ, D₅ᵢ, und
- Ausgleichen der von jeder Videokamera erzeugten Videobilder auf eine solche Weise, dass die Bildpunkte P₁ᵢ₁, P₁ᵢ₂ einen vorbestimmten Abstand von den Bildpunkten P₂ᵢ₁, P₂ᵢ₂ haben, und so, dass diese Videobilder ein stereoskopisches Videobild bilden können.

2. Verfahren nach Anspruch 1, wobei die Mehrzahl von Markierungen M₁₁, M₁₂, M₁₃; M₂₁, M₂₂, M₂₃; M₃₁, M₃₂, M₃₃ wenigstens neun beträgt, und dadurch, dass darüber hinaus in der ersten Gruppe von Geraden eine dritte virtuelle Gerade D3 gebildet wird und in der zweiten Gruppe von Geraden eine sechste virtuelle Gerade D6 gebildet wird, und Ermitteln durch Annäherung, in jedem Videobild, eines ersten Zusammenlaufbildpunktes P₁ᵢ₁, P₁ᵢ₂, der als der Punkt angesehen wird, in dem die drei ersten, zweiten und dritten Bildgeraden D₁ᵢ, D₂ᵢ, D₃ᵢ zusammenlaufen, und eines zweiten Zusammenlaufbildpunktes P₂ᵢ₁, P₂ᵢ₂, der als der Punkt angesehen wird, in dem die drei vierten, fünften und sechsten Bildgeraden D₄ᵢ, D₅ᵢ, D₆ᵢ zusammenlaufen.

3. Verfahren nach einem der Ansprüche 1 und 2, wobei die Bearbeitung der von jeder Videokamera hergestellten Videobilder computergestützt erfolgt, so dass diese Signale für zwei Bilder repräsentativ sind, die ein stereoskopisches Videobild bilden können.

4. Verfahren nach einem der Ansprüche 1 und 2, wobei die Verarbeitung der von jeder Videokamera hergestellten Videosignale, so dass diese Signale für zwei Bilder repräsentativ sind, die ein stereoskopisches Videobild formen können, im Regeln der relativen Positionen der beiden Videokameras zueinander besteht.

5. Verfahren nach einem der Ansprüche 2 bis 4, wobei die drei ersten, zweiten und dritten virtuellen Geraden D₁, D₂, D₃ so definiert sind, dass der erste Punkt P₁ im Unendlichen liegt.

6. Verfahren nach einem der Ansprüche 2 bis 5, wobei die drei vierten, fünften und sechsten virtuellen Geraden D₄, D₅, D₆ so definiert werden, dass der zweite Punkt P₂ im Unendlichen liegt.

7. Verfahren nach einem der Ansprüche 2 bis 6, wobei es ferner einen Schritt des Umpositionierens in den Videobildern der zwei Gruppen von drei Geraden D₁ᵢ, D₂ᵢ, D₃ᵢ einerseits und D₄ᵢ, D₅ᵢ, D₆ᵢ andererseits auf eine solche Weise beinhaltet, dass sie sich in einem einzigen Punkt schneiden, wobei diese Zusammenlaufpunkte die Zusammenlaufbildpunkte P₁ᵢ₁, P₁ᵢ₂ und P₂ᵢ₁, P₂ᵢ₂ bestimmen.

8. Verfahren nach einem der Ansprüche 2 bis 7, wobei die Markierungen im Wesentlichen miteinander identisch sind.

9. Verfahren nach Anspruch 7, wobei sich die Markierungen M₁₁, M₁₂, M₁₃; M₂₁, M₂₂, M₂₃; M₃₁, M₃₂, M₃₃ auf wenigstens einer der ersten und zweiten Gruppe von virtuellen Geraden D₁, D₂, D₃ und D₄, D₅, D₆ im gleichen Abstand voneinander befinden.

10. Verfahren nach einem der Ansprüche 4 und 5 bis 9, in Abhängigkeit von Anspruch 4, wobei es ferner einen Schritt des Steuerns jeder Videokamera (1, 2) durch Modifizieren von wenigstens einem der folgenden ihrer Parameter beinhaltet: ihr Standort, ihr Azimut, ihr optisches Sichtfeld, ihre Auflösung.

11. Verfahren nach einem der Ansprüche 1 bis 10, wobei der charakteristische Punkt P_{c} jedes Markierungsbildes anhand von wenigstens einem der folgenden Parameter ermittelt wird: Schittpunkt von wenigstens zwei Geraden, die jeweils vier nicht mit dem Markierungsbild zusammenfallende Punkte paarweise verbinden, das Baryzentrum der Tönung des Markierungsbildes, der Schwerpunkt der Gesamtfläche des Markierungsbildes.

12. Verfahren nach einem der Ansprüche 1 bis 11, wobei, wenn die Markierungen im Wesentlichen rechteckig sind, der gegebene Punkt P_{d11}, P_{d12}, P_{d13}; P_{d21}, P_{d22}, P_{d23}; P_{d31}, P_{d32}, P_{d33} anhand von wenigstens einem der folgenden Punkte ermittelt wird: der Schnittpunkt der beiden Diagonalen des Rechtecks jeder Markierung, einer der Scheitelpunkte des Rechtecks.

13. Vorrichtung, die Mittel umfasst, um das Verfahren nach Anspruch 3 auszuführen, **dadurch gekennzeichnet, dass** sie Folgendes umfasst:
- eine Mehrzahl von Markierungen M₁₁, M₁₂, M₁₃; M₂₁, M₂₂, M₂₃; M₃₁, M₃₂, M₃₃, die sich auf der Oberfläche (5) des Wegabschnitts (4) jeweils an den Schnittpunkten von zwei Gruppen von wenigstens zwei virtuellen Geraden befinden, die in einem ersten und einem zweiten Punkt P₁, P₂ zusammenlaufen,
- einen Träger (11), der in direkter Sicht des Wegabschnitts vorgesehen werden kann,
- wenigstens zwei an dem Träger montierte Videokameras (1, 2), wobei jede Kamera jeweils einen Ausgang (12, 13) für Videosignale umfasst, die für die von der Videokamera gelieferten Videobilder repräsentativ sind, und
- eine programmierbare Videosignalanalyse- und -verarbeitungseinheit (25), die mit den Ausgängen (12, 13) der beiden Videokameras verbundene Eingangsanschlüsse aufweist.

14. Vorrichtung, die Mittel umfasst, mit denen das Verfahren nach Anspruch 4 ausgeführt werden kann, **dadurch gekennzeichnet, dass** sie Folgendes umfasst:
- eine Mehrzahl von Markierungen M₁₁, M₁₂, M₁₃; M₂₁, M₂₂, M₂₃; M₃₁, M₃₂, M₃₃, die sich auf der Oberfläche (5) des Wegabschnitts (4) jeweils an den Schnittpunkten von zwei Gruppen von wenigstens zwei virtuellen Geraden befinden, die in einem ersten und einem zweiten Punkt P₁, P₂ zusammenlaufen,
- einen Träger (11), der in direkter Sicht des Wegabschnitts (4) vorgesehen werden kann,
- wenigstens zwei Videokameras (1, 2), die jeweils einen Ausgang (12, 13) für Videosignale umfassen, die für die von der Videokamera gelieferten Videobilder repräsentativ sind,
wobei jede Kamera ein Objektiv mit veränderlichem Brennpunkt (14, 15) umfasst, das über einen Steuereingang (16, 17) gesteuert werden kann,
- steuerbare Mittel (18, 19) zum Montieren jeder der beiden Videokameras in Bezug auf den Träger (11) um wenigstens zwei nicht zusammenfallende Achsen drehbar, wobei diese Mittel mit Steuereingängen (20, 21) gesteuert werden können, und
- eine programmierbare Videosignalanalyse- und -verarbeitungseinheit (25), die mit den Ausgängen (12, 13) der zwei Videokameras (1, 2) verbundene Eingangsanschlüsse und Ausgangsanschlüsse umfasst, die mit den Steuereingängen (20, 21) der steuerbaren Mittel (18, 19) verbunden sind, um jede der beiden Videokameras so zu montieren, dass sie in Bezug auf den Träger (11) um wenigstens zwei nicht zusammenfallende Achsen und in Bezug auf die Steuereingänge (16, 17) des Objektivs mit veränderlichem Brennpunkt (14, 15) jeder Videokamera gedreht werden kann.

## Claims

1. A method for calibrating at least two video cameras (1, 2) relative to one another, said cameras forming a device for capturing stereoscopic views (3) of a path portion (4), said cameras having optical axes in an oblique direction relative to the surface of said path portion, said method being **characterised in that** it comprises:
- disposing, on the surface (5) of said path portion (4), a plurality of at least four marks, at the intersections of a first group of virtual straight lines comprising at least one first and one second virtual straight line D₁, D₂ concurring at a first point P₁, and a second group of virtual straight lines comprising at least one fourth and one fifth virtual straight line D₄, D₅ concurring at a second point P₂ that does not coincide with said first point P₁,
- forming, with each of said two video cameras, a video image of said path portion (4) comprising said marks,
- defining, in each of the two video images, a characteristic point P_{c} of each image of said marks,
- determining, in each video image, by means of the characteristic points P_{c}, first and second image straight lines D₁ᵢ, D₂ᵢ and fourth and fifth image straight lines D₄ᵢ, D₅ᵢ,
- determining, in each video image, a first image point of concurrence P₁ᵢ₁, P₁ᵢ₂ of said first and second image straight lines D₁ᵢ, D₂ᵢ and a second image point of concurrence P₂ᵢ₁, P₂ᵢ₂ of said fourth and fifth image straight lines D₄ᵢ, D₅ᵢ, and
- compensating the video images that are produced by each video camera so that said image points P₁ᵢ₁, P₁ᵢ₂ are at a determined distance from said image points P₂ᵢ₁, P₂ᵢ₂ and that said video images are capable of being used to form a stereoscopic video image.

2. The method of claim 1, wherein said plurality of marks M₁₁, M₁₂, M₁₃; M₂₁, M₂₂, M₂₃; M₃₁, M₃₃ comprises at least nine marks, and in that, in the first group of straight lines, a third virtual straight line D₃ is also formed and in the second group of straight lines, a sixth virtual straight line D₆ is also formed, and in that an approximation is used to determine, in each video image, a first image point of concurrence P₁ᵢ₁, P₁ᵢ₂ that is considered to be the point at which the three first, second and third images of straight lines D₁ᵢ, D₂ᵢ, D₃ᵢ are concurrent and a second image point of concurrence P₂ᵢ₁, P₂ᵢ₂ that is considered to be the point at which the fourth, fifth and sixth images of straight lines D₄ᵢ, D₅ᵢ, D₆ᵢ are concurrent.

3. The method of any one of claims 1 to 2, wherein the processing of the video signals that are produced by each video camera is carried out by computer based means so that said signals represent two images that are capable of being used to form a stereoscopic video image.

4. The method of any one of claims 1 to 2, wherein the processing of the video signals, produced by each video camera so that said signals represent two images that are capable of being used to form a stereoscopic video image, comprises controlling the relative positions of said two video cameras relative to each other.

5. The method of any one of claims 2 to 4, wherein the three first, second and third virtual straight lines D₁, D₂, D₃ are defined so that the first point P₁ lies at infinity.

6. The method of any one of claims 2 to 5, wherein the three fourth, fifth and sixth virtual straight lines D₄, D₅, D₆ are defined so that the second point P₂ lies at infinity.

7. The method of any one of claims 2 to 6, further comprising a step of repositioning in the video images of the two groups of three straight lines, on the one hand, D₁ᵢ, D₂ᵢ, D₃ᵢ and, on the other hand, D₄ᵢ, D₅ᵢ, D₆ᵢ, so that they intersect at a single point, said points of concurrence determining said image points of concurrence P₁ᵢ₁, P₁ᵢ₂ and P₂ᵢ₁, P₂ᵢ₂.

8. The method of any one of claims 2 to 7, wherein said marks are substantially identical with each other.

9. The method of claim 7, wherein said marks M₁₁, M₁₂, M₁₃; M₂₁, M₂₂, M₂₃; M₃₁, M₃₂, M₃₃ are located on at least one of the first and second groups of virtual straight lines D₁, D₂, D₃ and D₄, D₅, D₆ at equal distances from each other.

10. The method of claim 4 and any one of claims 5 to 9 as dependent on claim 4, further comprising a step of adjusting each video camera (1, 2) by modifying at least one of its following parameters: its location, its azimuth, its optical field of vision and its resolution.

11. The method of any one of claims 1 to 10, wherein the characteristic point P_{c} of each image mark is determined by using at least one of the following parameters: the intersection of at least two straight lines that respectively pairwise connect four non-coinciding points of the mark image, the barycentre of the shade of the mark image and the centre of gravity of the total surface area of the image mark.

12. The method of any one of claims 1 to 11, wherein, when said marks are of substantially rectangular shape, the given point P_{d11}, P_{d12}, P_{d13}; P_{d21}, P_{d22}, P_{d23}; P_{d31}, P_{d32}, P_{d33} is determined by at least one of the following points: the point of intersection of the two diagonals of the rectangle of each mark, one of the vertices of the rectangle.

13. A device comprising means for implementing the method of claim 3, **characterised in that** it comprises:
- a plurality of marks M₁₁, M₁₂, M₁₃; M₂₁, M₂₂, M₂₃; M₃₁, M₃₃ that are located on said surface (5) of said path portion (4) respectively at the intersection points of two groups of at least two virtual straight lines that are concurrent at a first and a second point P₁, P₂;
- a support (11) that is designed to be installed in direct view of said path portion;
- at least two video cameras (1, 2) that are mounted on said support, each camera comprising an output (12, 13) of video signals that represent video images that are provided by said video camera, and
- a programmable unit for analysing and processing video signals (25) comprising input terminals that are connected to said outputs (12, 13) of said two video cameras.

14. A device comprising means for implementing the method of claim 4, **characterised in that** it comprises:
- a plurality of marks M₁₁, M₁₂, M₁₃; M₂₁, M₂₂, M₂₃; M₃₁, M₃₃ that are located on said surface (5) of said path portion (4) respectively at the intersection points of two groups of at least two virtual straight lines that are concurrent at a first and a second point P₁, P₂;
- a support (11) that is designed to be installed in direct view of said path portion (4);
- at least two video cameras (1, 2) each comprising an output (12, 13) of video signals that represent video images that are provided by said video camera,
each camera comprising a variable focus lens (14, 15) that can be controlled from a control input (16, 17);
- controllable means (18, 19) for mounting each of said two video cameras by rotation relative to said support (11) around at least two non-coinciding axes, said means being designed to be controlled from control inputs (20, 21), and
- a programmable unit for analysing and processing video signals (25) comprising input terminals that are connected to said outputs (12, 13) of said two video cameras (1, 2) and output terminals that are connected to said control inputs (20, 21) of said controllable means (18, 19) for mounting each of said two video cameras in order to be rotatable relative to said support (11) around at least two non-coinciding axes and relative to said control inputs (16, 17) of said variable focus lens (14, 15) of each video camera.
